Europäisches Patentamt

European Patent Office

Office européen des brevets

(19)

(11) Publication number: **0 012 532**
**B1**

(12) **EUROPEAN PATENT SPECIFICATION**

(45) Date of publication of patent specification: **17.08.83**

(21) Application number: **79302660.0**

(22) Date of filing: **22.11.79**

(51) Int. Cl.³: **H 01 R 23/02,**
**H 01 R 23/68, B 29 C 6/04,**
**B 29 F 1/10**

(54) Electrical connector receptacle and method of making a strip of electrical connector receptacles.

(30) Priority: **14.12.78 US 969504**

(43) Date of publication of application:
**25.06.80 Bulletin 80/13**

(45) Publication of the grant of the patent:
**17.08.83 Bulletin 83/33**

(84) Designated Contracting States:
**BE DE FR GB IT NL SE**

(56) References cited:
**AT - B - 339 988**
**CH - A - 558 088**
**GB - A - 1 166 603**
**GB - A - 1 251 062**
**US - A - 3 954 320**
**US - A - 4 153 327**

(73) Proprietor: **AMP INCORPORATED**
**Eisenhower Boulevard**
**Harrisburg Pennsylvania (US)**

(72) Inventor: **Hughes, Donald Wayne Kent**
**406 Sharon Avenue**
**Mechanicsburg Pennsylvania (US)**
Inventor: **Lauterbach, John Henry Ferdinand**
**255 Dolphin Point Road Apt. 501**
**Clearwater Florida (US)**

(74) Representative: **Terrell, Thomas Gwyn et al,**
**20 Queensmere**
**Slough Berkshire SL1 1YZ (GB)**

Courier Press, Leamington Spa, England.

# Electrical connector receptacle and method of making a strip of electrical connector receptacles

There is described in the specification of our European Patent Application No 79.301574.4, published on 16 April 1980 as EP—A1—0009867 and which forms part of the state of the art by virtue of Article 54(3) EPC, an electrical connector receptacle comprising an insulating housing having a plug-receiving end and a rearward end, a plug-receiving opening extending into the plug-receiving end, the opening having opposed internal side walls and opposed internal end walls, the housing having oppositely directed external side walls and opposed directed external end walls, and a plurality of electrical conductors in side-by-side spaced-apart relationship, each of the conductors comprising a first end portion which serves as a contact portion extending from one of the internal side walls diagonally into the opening and towards the rearward end, an intermediate portion extending from the plug-receiving end through the housing between the one internal side wall and the adjacent external side wall and towards the rearward end, and a second end portion which extends from the housing, the plug-receiving opening being dimensioned to receive an electrical connector plug having spaced-apart contact members therein to engage the contact portions.

An electrical connector plug for such a connector receptacle is described in detail in United States Patent Specification No. 3,954,320, for example.

The connector receptacles disclosed in the European patent specification mentioned above have stamped and formed electrical conductors therein. One end of each stamped and formed conductor extends beyond the housing of the connector receptacle so that it can be mounted on a circuit board with the ends of the conductors extending into openings in the circuit board. These ends of the conductors can then be soldered to conductors on the circuit board. The stamped and formed conductors are assembled to the connector housing by the insertion of the intermediate portions of the conductors into channels in one of the external side walls of the housing. One end of each conductor is bent back so as to extend into the plug-receiving opening and these ends serve as the contact portions.

It may be desirable under some circumstances for the intermediate portions of the conductors to be firmly and immovably confined in the housing rather than to be inserted into channels in the housing. Such inserted conductors are satisfactory in many circumstances of use, but there are some circumstances under which the conductors are preferably enclosed in order to achieve improved dielectric characteristics and to protect the conductors from the atmosphere or from fouling matter and from damage during handling of the connector receptacle. In order to enhance the protection of the conductors, it may also be desirable for the plug receiving end of the housing to have a flat surface completely surrounding the plug receiving opening, rather than having a recess extending to the conductors, as in the case of the known receptacle discussed above. It may further be desirable for a plurality of connector receptacles to be produced in strip form for winding about a storage reel, for subsequent severing from the strip and assembly by machinery to a printed circuit board, for example. Such a reel can readily be transported to a customer's plant for mounting on an applicator machine in the manner usual in the application of electrical parts.

According to one aspect of the present invention, therefore, a method of making a strip of electrical connector receptacles as defined in the first paragraph of this specification is characterised by the steps of stamping a continuous length of electrically conductive sheet metal to produce a continuous strip comprising a carrier strip having groups of blanks for the conductors extending therefrom at spaced intervals with the number of conductor blanks in each group being equal to the number of conductors in each connector receptacle, feeding the continuous strip through a forming press and forming the conductor blanks to the shape of the conductors in the connector receptacle, intermittently feeding the continuous strip to a mould having a mould cavity which conforms to the shape of the housing and having core pins in the mould cavity which conform to the shape of the plug-receiving opening, positioning one of the groups of formed conductors in the cavity with the contact portions of the conductors held between the core pins, injecting moulding material into the cavity, opening the mould, and again feeding the continuous strip whereby, the continuous strip, when it emerges from the mould, has connector housings moulded onto each group of conductors, with the intermediate portions thereof firmly and immovably confined in the connector housings.

GB—A—1,166,603 teaches the moulding of plastics material about semi-conductor devices on flat lead frames arranged in strip form. The moulding operations are carried out simultaneously on the whole of the strip so that the length of the finished strip is determined by the number of moulds provided. The strip of lead frames is not fed to a forming press before the moulding operations and the moulds are not provided with means for forming cavities in the moulding material or for gripping a bent out portion of the strip.

According to GB—A—1,251,062, a progression strip from which electrical pin terminals have been formed is fed to a stamping station at which depressions are punched in the pin portions of the terminals which are then fed to a terminal severing station. The severed, and thus separate, terminals are then secured in a mould in which plastics material is moulded about the pin portions to provide a flexible plug unit. Neither the mould, nor the means by which the terminals are secured therein are either shown or described in GB—A—1,251,062.

According to another aspect of the present invention, an electrical connector receptacle as defined in the first paragraph of this specification, is characterised in that the intermediate portions of the conductors are insert-moulded into the housing, the second end portions of the conductors emerging from the adjacent external side wall, the first end portions of the conductors emerging from the one internal side wall at a location proximate to the plug-receiving end, the intermediate portion of each conductor being tightly and immovably confined in the housing, the connector receptacle having been produced by stamping and forming a continuous strip comprising a carrier strip having at intervals there along groups of the conductors extending laterally therefrom, repetitively feeding a section of the continuous strip to an injection moulding apparatus having a mould cavity and core pins complementary with the housing, positioning a portion of the continuous strip having one of the groups of conductors thereon in the cavity, injecting moulding material into the cavity, removing the section of the continuous strip from the cavity and severing the carrier strip from the conductors.

For a better understanding of the invention and to show how it may be carried into effect, reference will now be made by way of example to the accompanying drawings, in which:—

Figure 1 is a perspective view of an electrical connector receptacle made in accordance with the invention mounted on a circuit board and showing an electrical connector plug in alignment with a plug-receiving opening in a moulded insulating housing of the connector receptacle;

Figure 2 is a front view of the connector receptacle;

Figure 3 is a sectional side view taken along the lines III—III of Figure 2;

Figure 4 is a plan view of a section of continuous sheet metal strip of conductors and mounting post blanks;

Figure 5 is a plan view of the strip illustrating shearing and forming operations which are performed on the strip prior to moulding of the receptacle housing;

Figure 6 is a view taken along the lines VI—VI of Figure 5;

Figure 7 is a diagrammatic view illustrating one manufacturing process for producing connector receptacles;

Figure 8 is a fragmentary cross-sectional view of two parts of a mould for producing insulating housings by injection moulding, this view showing the mould parts in their open condition;

Figure 9 is a view similar to Figure 8 but with the mould parts closed; and

Figure 10 is a diagrammatic perspective view illustrating the manner in which the insulating housings are moulded onto the terminal strip.

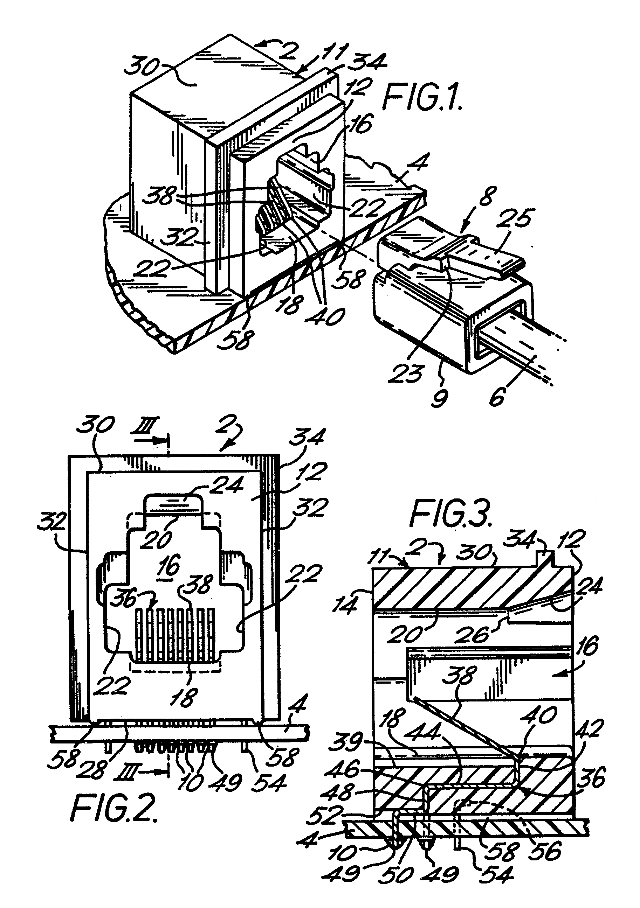

Figure 1 shows an electrical connector receptacle 2 mounted on a circuit board 4 and serving to provide connections between conductors in a cable 6 and conductors 10 on the underside of the circuit board. The cable 6 has an electrical connector plug 8 on its end of the general type described in United States Patent Specification No. 3,954,320. As explained in that specification, the conductors in the cable 6 are electrically connected to spaced-apart terminals in the plug. The terminals have edge portions which are exposed on the underside 9 of the plug so that when the plug is inserted into the receptacle, these edge portions of the terminals in the plug will engage spring contacts in the receptacle 2.

The receptacle 2 comprises an insulating housing 11 having a plug-receiving end 12, a rearward end 14, and having a plug-receiving opening 16 which extends from the plug-receiving end to the rearward end. This opening is contoured to receive the plug as will be apparent from an inspection of Figure 1.

The opening 16 has lower and upper internal side walls 18, 20 and internal end walls 22. A centrally located ramp 24 is provided in the upper side wall 20 to provide clearance for the leading end of the plug 8 and shoulders 26 are provided on each side of this ramp adjacent to the end walls 22. These shoulders co-operate with shoulders 23 on a latch arm 25 of the plug to retain the plug in the opening after insertion.

The housing has lower and upper external side walls 28, 30 and external end walls 32. A continuous flange 34 is provided on the end walls 32 and the upper side wall 30 adjacent to the plug-receiving end 12. This flange is intended to bear against the surface of a panel (not shown) when the receptacle is mounted on a circuit board and where the panel extends normally of the surface of the circuit board.

A plurality of side-by-side, spaced-apart, stamped and formed conductors 36 are embedded in the housing and have first end portions 38 which emerge from the internal side wall 18 as shown at 40 at a location adjacent to, but spaced from, the mating end 12. The first end portions 38 of these conductors extend diagonally from the side wall 18 away from this side wall and towards the rearward end of the housing. These first ends 38 serve as spring contacts and are flexed downwardly and enter side-by-side recesses 39 in the side wall 18 when the plug is fully inserted into the opening.

Intermediate portions 42, 44 of each conductor 36 are embedded in the housing between the internal and external side walls 18, 28. These intermediate portions extend downwardly as shown at 42 from the side wall 18 and then rearwardly as shown at 44 towards the rearward end 14 of the housing. Each conductor is bent downwardly at 46, extends downwardly in the housing as shown at 48 and emerges from the external side wall 28 to provide an exposed end 49 which is intended for soldering to a conductor on the circuit board 4. The ends 49 are staggered, as shown, by bending every other conductor rearwardly as shown at 50, recesses 52 being provided in the side wall 28 for these bent portions. The projecting ends 49 of the conductors thus all extend normally from the side wall 28 but are staggered with reference to each other.

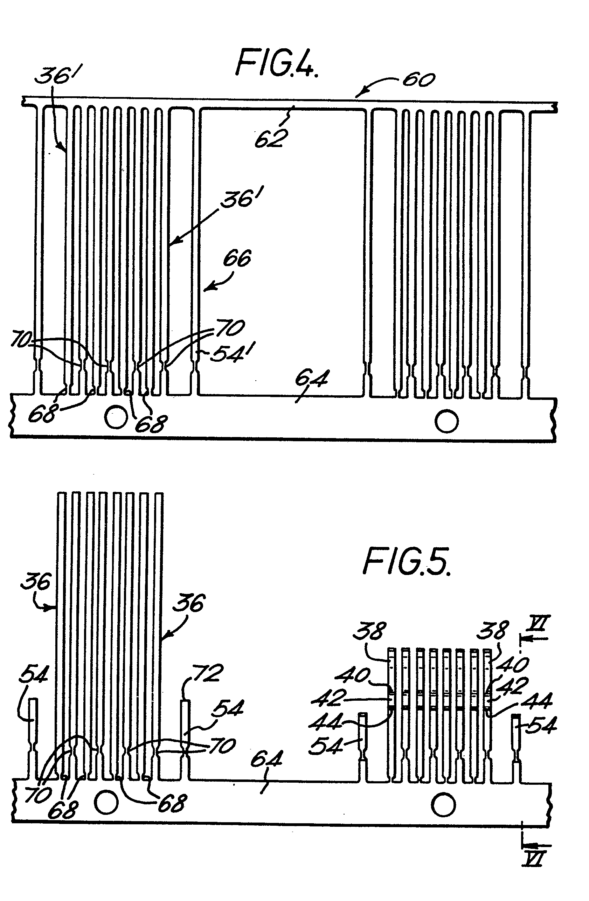

Non-current carrying metallic mounting and supporting posts 54 are embedded in the housing adjacent to the external end wall 32 so that the ends 49 of the conductors are between the mounting posts 54. Each mounting post has a rightwardly formed, as viewed in Figure 3, upper end 56 embedded in the housing to ensure that it will be firmly held therein. The lower external side wall 28 also has formed integrally therewith, stand off ribs 58 which support the housing above the surface of the circuit board during soldering, thereby to prevent flow of solder onto the upper surface of the board.

As described with reference to Figures 4 to 10, receptacles 2 in accordance with the invention, are manufactured by first producing a stamped continuous strip 60 comprising spaced-apart parallel carrier strips 62, 64 having connected thereto at intervals transversely extending groups 66 of conductor blanks 36' and support post blanks 54' with the spacing between adjacent conductor blanks 36' being the same as the spacing between the conductors 36 in the connector receptacle. The support post blanks 54' are also spaced from the immediately adjacent conductor blanks 36' by the same distance as that which exists in the connector receptacle. The conductor blanks 36' may be left flat or they might be formed to a slightly arcuate cross-section, if desired. Alternate conductor blanks 36' have relatively narrow neck portions 70 which are adjacent to, but are spaced from, the carrier strip 64 and the remaining conductor blanks have neck portions 68 which are immediately adjacent to the carrier strip 64. During manufacture, the conductors are severed from the carrier strip 64 at those neck portions and since two different lengths of conductors are required in the connector receptacle, by reason of the offset relationship of the ends 49 of the conductors, the necks 68, 70 are at different locations relative to the carrier strip 64. The support post blanks 54' also have reduced width necks as shown and these blanks are severed from the carrier strip at these neck portions.

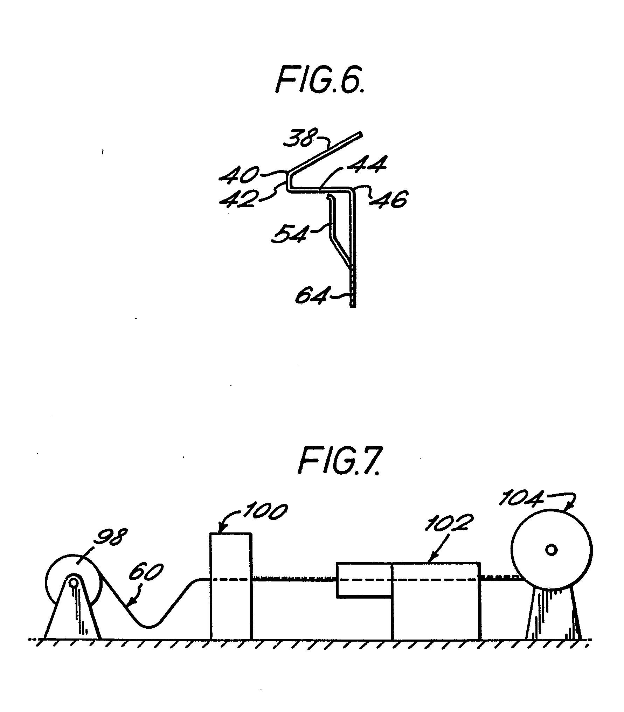

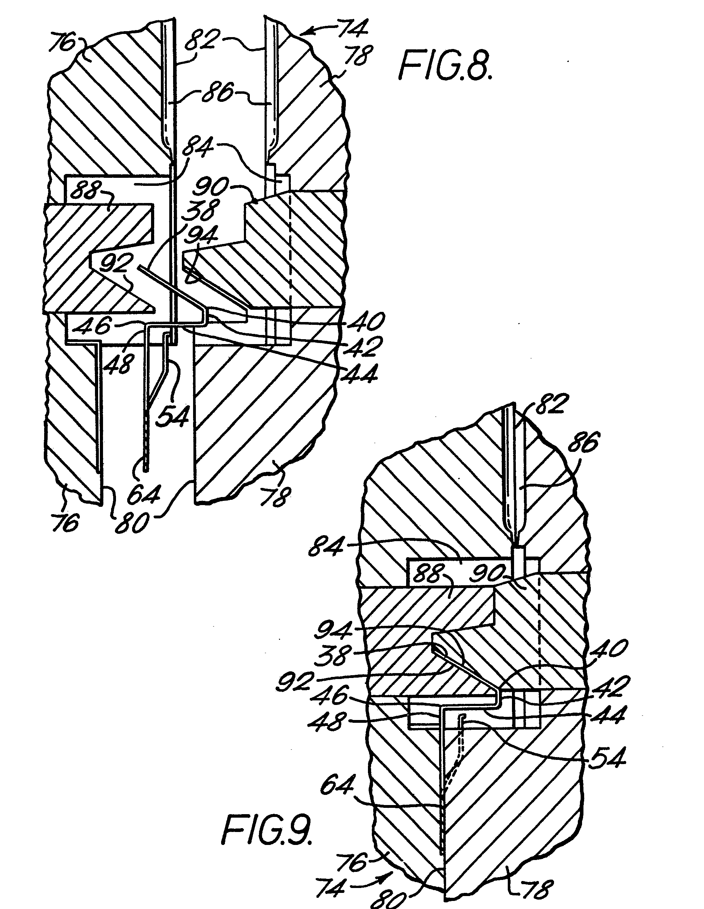

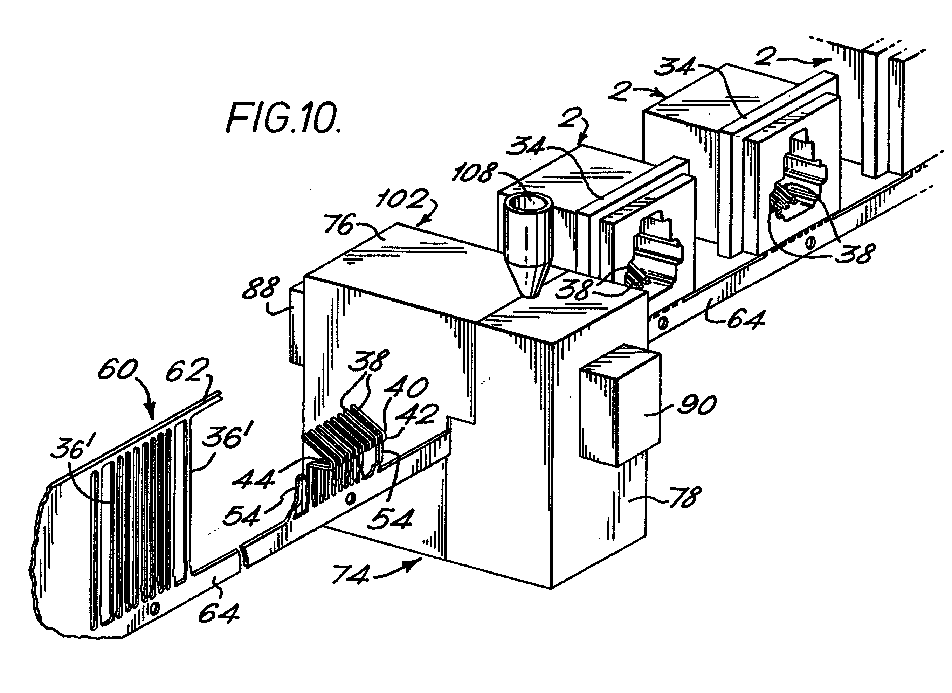

When connector receptacles are manufactured by the method illustrated in Figures 7 and 10, the flat strip of Figure 4 is produced in a first stamping operation, wound on a reel 98, and transported to the location at which the housings are moulded onto the strip 60. The strip 60 is fed through a forming press 100 in which the carrier strips 62 is severed from the ends of the conductor blanks 36' and the support post blanks 54' are severed as shown at 72 at locations spaced from the carrier strip 64. After the severing operation has been carried out in the forming press 100, the conductor blanks 36' and the support post blanks 54' are formed to their final profile as shown in Figure 6 with the carrier strip 64 integral with the lower ends of the formed conductors and support posts. The support posts are offset from the plane of the carrier strip 64 as shown in Figure 6.

Thereafter, the strip is fed to a moulding machine 102 and the housings are moulded onto the strip in a mould 74 shown in Figures 8 to 10. The mould 74 comprises two parts 76, 78 which are movable from their open position, Figure 8, to their closed positions, Figures 9 and 10, in which their opposed surfaces are against each other along parting lines 80, 82. The opposed faces have recesses which define a mould cavity 84 which conforms to the connector housing and a sprue 86 extends to this cavity through which the thermoplastic material is injected into the cavity. Moulding material is inejcted into the sprue by a nozzle 6' of a suitable moulding machine.

Core pins 88, 90 mounted in the mould parts 76, 78, respectively, extended into the cavity and engage each other when the mould parts are closed as shown in Figure 9. The opposed surfaces of the core pins are inclined as shown at 94, 92 and have recesses which receive the ends 38 of the conductors so that the intermediate portions of the conductor 42, 44, 48 extend through the cavity below the core pins and downwardly as viewed in the Figure 9, along the parting line 80. The parting line has a recess for reception of these lower portions of the conductors and the carrier strip. The mould parts are also contoured at the parting line such that the offset mounting posts 54, which are integral with the carrier strip 64 at this stage of the manufacturing process will be clamped as shown in Figure 9 in offset relationship to the plane defined by the lower portions of the conductors and the carrier strip 64.

Strip feeding means are provided for advancing the strip during each moulding cycle by an amount such that a group of conductors and its associated mounting posts will be located between the mould parts 76, 78 after feeding so that when the mould parts are closed, the conductors and the mounting posts will be precisely positioned in the mould cavity and the contact spring portions of the conductors will be held between the surfaces 90, 92 of the core pins as shown in Figure 9. The moulding material is then injected into the cavity through the sprue 82, the mould parts are moved to their open position, and the strip is advanced. The housings may be moulded of any suitable thermoplastic material such as a polycarbonate, or a filled nylon material.

If desired, the continuous strip comprising the carrier strip 64 having the housings moulded thereon at spaced intervals may be maintained as a strip and wound on a reel 104 for further processing, such as insertion into circuit boards by automatic machinery. The offset ends 49 would then be bent into grooves 52 at the time of insertion. Alternatively, the individual connector receptacles can be severed from the strip by shearing the conductors and the offset mounting posts 54 from the carrier strip and bending the offset ends 49.

In the connector receptacles, the intermediate portions of the conductors 42, 44 are totally embedded in the housing and are thereby protected from the atmosphere or from damage during handling. Furthermore, the mating end 12 of the housing may have a flat surface completely surrounding the plug-receiving opening 16 rather than, as with known connector receptacles of the same kind, a recess extending to the reversely formed portions 42 of the conductors. These features render connector receptacles as described herein extremely durable and well suited for use in critical applications where they must be protected against damage. It will be apparent from Figure 2 that the soldered connections between the ends of the conductors of the connector receptacle and the conductors on the circuit board are protected by the soldered connections between the mounting posts 54 and the metallised portions of the circuit board. Should a lateral force, as seen in Figure 2, be applied to the housing, tending to rock the housing relative to the circuit board, the effects of this force will be absorbed by the mounting posts 54 and will not be transmitted to the soldered electrical connections between the conductors of the connector receptacle and the circuit board conductors. More than two mounting posts 54 may be provided.

**Claims**

1. A method of making a strip of electrical connector receptacles each comprising an insulating housing (11) having a plug-receiving end (12) and a rearward end (14), a plug-receiving opening (16) extending into the plug-receiving end (12), the opening (16) having opposed internal side walls (18, 20) and opposed internal end walls (22), the housing (11) having oppositely directed external side walls (28, 30) and oppositely directed external end walls (32), and a plurality of electrical conductors (36) in side-by-side spaced-apart relationship, each of the conductors (36) comprising a first end portion which serves as a contact portion (38) extending from one (18) of the internal side walls (18, 20) diagonally into the opening (16) and towards the rearward end (14), an intermediate portion (42, 44) extending from the plug-receiving end (12) through the housing (11) between the one internal side wall (18) and the adjacent external side wall (28) and towards the rearward end (14), and a second end portion (49) which extends from the housing (11), the plug-receiving opening (16) being dimensioned to receive an electrical connector plug (8) having spaced-apart contact members therein for engaging the contact portions (38); the method being characterised by the steps of stamping a continuous length of electrically conductive sheet metal to produce a continuous strip (60) comprising a carrier strip (64) having groups of blanks (36') for the conductors (36) extending therefrom at spaced intervals with the number of conductor blanks (36') in each group being equal to the number of conductors (36) in each connector receptacle, feeding the continuous strip (60) through a forming press (100) and forming the conductor blanks to the shape of the conductors (36) in the connector receptacle, intermittently feeding the continuous strip (60) to a mould (102) having a mould cavity (84) which conforms to the shape of the housing (11) and having core pins (88, 90) in the mould cavity (84) which conform to the shape of the plug-receiving opening (16), positioning one of the groups of formed conductors (36) in the cavity (84) with the contact portions (38) of the conductors (36) held between the core pins (88, 90), injecting moulding material into the cavity (84), opening the mould (102), and again feeding the continuous strip (60), whereby the continuous strip (60), when it emerges from the mould (102), has connector housings (11) moulded onto each group of conductors (36) with the intermediate portions (42, 44) thereof firmly and immovably confined in the connector housings (11).

2. A method according to Claim 1 characterised by the provision of neck portions (70) on the conductors (36) to facilitate the step of severing the conductors (36) from the carrier strip (64) after the continuous strip (60) has been fed from the mould (102).

3. A method according to Claim 1 or 2, characterised by the connector receptacles (2) each having two metallic mounting posts (54) extending from the housing (11), the second end portions (49) of the conductors (36) being positioned between the mounting posts (54), the method including the steps of forming two mounting post blanks (54') for each of the groups of conductors (36) during stamping of the continuous length, with the conductor blanks (36') of each group located between the mounting post blanks (54').

4. An electrical connector receptacle comprising an insulating housing (11) having a plug-receiving end (12) and a rearward end (14), a plug-receiving opening (16) extending into the plug-receiving end (12), the opening (16) having opposed internal side walls (18, 20) and opposed internal end walls (22), the housing (11) having oppositely directed external side walls (28, 30) and oppositely directed external end walls (32), and a plurality of electrical conductors (36) in side-by-side spaced-apart relationship, each of the conductors (36) comprising a first end portion which serves as a contact portion (38) extending from one (18) of the internal side walls (18, 20) diagonally into the opening (16) and towards the rearward end (14), an intermediate portion (42, 44) extending from the plug-receiving end (12) through the housing (11) between the one internal side wall (18) and the adjacent external side wall (28) and towards the rearward end (14), and a second end portion (49) which extends from the housing (11), the plug-receiving opening (16) being dimensioned to receive an electrical connector plug (8) having spaced-apart contact members therein to engage the contact portions (38); characterised in that the intermediate portions (42, 44) of the conductors (36) are insert-moulded in the housing (11), the second end portions (49) of the conductors (36) emerging from the adjacent external side wall (28), the first end portions (38) of the conductors (36) emerging from the one internal side wall (18) at a location proximate to the plug-receiving end (12), the intermediate portion (42, 44) of each conductor (36) being tightly and immovably confined in the housing (11), the connector receptacle (2) having been produced by stamping and forming a continuous strip (60) comprising a carrier strip (64) having at intervals there along groups of the conductors (36) extending laterally therefrom, repetitively feeding a section of the continuous strip (60) to an injection moulding apparatus (102) having a mould cavity (84) and core pins (88, 90) complementary with the housing (11), positioning a portion of the continuous strip (60) having one of the groups of conductors (36) thereon in the cavity (84), injecting moulding material into the cavity (84), removing the section of the continuous strip (60) from the cavity and severing the carrier strip (64) from the conductors (36).

5. An electrical connector receptacle according to Claim 4, characterised in that the connector receptacle (2) is adapted for mounting on a circuit board (4) with the adjacent external side wall (28) against the circuit board (4), the housing (11) having a plurality of stamped and formed metallic mounting posts (54) insert-moulded therein between the one internal side wall (18) and the adjacent external side wall (28), the metallic mounting posts (54) extending normally from the adjacent external side wall (28), the second end portions (49) of the conductors (36) being positioned between the mounting posts (54), the mounting posts (54) being for insertion into post-receiving holes in the circuit board (4).

6. An electrical connector receptacle according to Claim 4 or 5, characterised in that the second end portions (49) of the conductors (36) extend normally of the adjacent external side wall (28).

7. An electrical connector receptacle according to Claim 4, 5 or 6, characterised in that alternate ones of the second end portions (49) are offset towards the rearward end (14) of the housing (11).

**Patentansprüche**

1. Verfahren zur Herstellung einer zusammenhängenden Reihe elektrischer Verbinder-Aufnahmeelemente, von denen jedes ein Isoliergehäuse (11) aufweist, das ein Steckeraufnahmeende (12) und ein rückwärtiges Ende (14) hat, wobei sich eine Steckeraufnahmeöffnung (16) in das Steckeraufnahmeende (12) hineinerstreckt und die Öffnung (16) einander gegenüberliegende, innenliegende Seitenwände (18, 20) und einander gegenüberliegende, innenliegende Endwände (22) aufweist, und wobei das Gehäuse (11) entgegengesetzt gerichtete außenliegende Seitenwände (28, 30) und entgegengestzt gerichtete, außenliegende Endwände (32) sowie eine Vielzahl elektrischer Leiter (36) in nebeneinander angeordnetem und voneinander beabstandetem Verhältnis aufweist, wobei jeder der Leiter (36) aufweist: einen ersten Endbereich, der als ein Kontaktbereich (38) dient, der sich von einer (18) der innenliegenden Seitenwände (18, 20) diagonal in die Öffnung (16) hinein und in Richtung auf das rückwärtige Ende (14) erstreckt, einen mittleren Bereich (42, 44), der sich von dem Steckeraufnahmeende (12) zwischen der einen innenleigenden Seitenwand (18) und der angrenzenden außenliegenden Seitenwand (28) durch das Gehäuse (11) hindurch und in Richtung auf das rückwärtige Ende (14) erstreckt, sowie einen zweiten Endbereich (49), der sich von dem Gehäuse (11) wegerstreckt, und wobei die Steckeraufnahmeöffnung (16) für die Aufnahme eines elektrischen Verbinder-Steckers (8) mit darin befindlichen, voneinander beabstandeten Kontaktelementen zum Angreifen an den Kontaktbereichen (38) dimensioniert ist; wobei das Verfahren gekennzeichnet ist durch folgende Schritte: Stanzen einer kontinuierlichen Länge von elektrisch leitendem Metallblech zur Herstellung eines kontinuierlichen Streifens (60), der einen Trägerstreifen (64) umfaßt, von dem sich Gruppen von Zuschnitten (36') für die Leiter (36) in Abständen wegerstrecken, wobei die Anzahl der Leiterzuschnitte (36') in jeder Gruppe gleich der Anzahl der Leiter (36) in jedem Verbinder-Aufnahmeelement ist, Fördern des kontinuierlichen Streifens (60) durch eine Formungspresse (100) und Formen der Leiterzuschnitte in die Form der Leiter (36) in dem Verbinder-Aufnahmeelement, intermittierendes Zuführen des kontinuierlichen Streifens (60) zu einer Form (102), die einen der Konfiguration des Gehäuses (11) entsprechenden Formenhohlraum (84) sowie Kernstifte (88, 90) in dem Formenhohlraum (84) aufweist, die der Form der Steckeraufnahmeöffnung (16) angepaßt sind, Positionieren einer der Gruppen der geformten Leiter (36) in dem Hohlraum (84), derart, daß die Kontaktbereiche (38) der Leiter (36) zwischen den Kernstiften (88, 90) gehalten werden, Einspritzen von Gießmaterial in den Hohlraum (84), Öffnen der Form (102) und erneute Zuführung des kontinuierlichen Streifens (60), wodurch der kontinuierliche Streifen (60) bei Verlassen der Form (102) auf jede Gruppe von Leitern (36) aufgegossene Verbindergehäuse (11) aufweist, wobei die mittleren Bereiche (42, 44) der Leiter (36) fest und unbeweglich in den Verbindergehäusen (11) eingeschlossen sind.

2. Verfahren nach Anspruch 1, gekennzeichnet durch das Vorsehen von Halsbereichen (70) an den Leitern (36) zur Erleichterung des Schrittes des Abtrennens der Leiter (36) von dem Trägerstreifen (64), nachdem der kontinuierliche Streifen (60) aus der Form (102) herausgefördert worden ist.

3. Verfahren nach Anspruch 1 oder 2, dadurch gekennzeichnet, daß die Verbinder-Aufnahmeelemente (2) jeweils zwei metallische Befestigungsstifte (54) aufweisen, die sich von dem Gehäuse (11) wegstrecken, wobei die zweiten Endbereiche (49) der Leiter (36) zwischen den Befestigungsstiften (54) positioniert sind, und wobei das Verfahren folgende Schritte umfaßt: Bildung von zwei Befestigungsstiftzuschnitten (54') für jede der Gruppen von Leitern (36) während des Stanzens der kontinuierlichen Länge, wobei sich die Leiterzuschnitte (36') jeder Gruppe zwischen den Befestigungsstiftzuschnitten (54') befinden.

4. Elektrisches Verbinder-Aufnahmeelement mit einem Isoliergehäuse (11), das ein Steckeraufnahmeende (12) und ein rückwärtiges Ende (14) aufweist, wobei sich eine Steckeraufnahmeöffnung (16) in das Steckeraufnahmeende (12) hineinerstreckt und die Öffnung (16) einander gegenüberliegende, innenliegende Seitenwände (18, 20) und einander gegenüberliegende, innenliegende Endwände (22) aufweist, und wobei das Gehäuse (11) entgegengesetzt gerichtete, außenliegende Seitenwände (28, 30) und entgegengesetzt gerichtete, außenliegende Endwände (32) sowie eine Vielzahl elektrischer Leiter (36) in nebeneinander angeordnetem und voneinander beabstandetem Verhältnis aufweist, wobei jeder der Leiter (36) aufweist: einen ersten Endbereich, der als ein Kontaktbereich (38) dient, der sich von einer (18) der innenliegenden Seitenwände (18, 20) diagonal in die Öffnung (16) hinein und in Richtung auf das rückwärtige Ende (14) erstreckt, einen mittleren Bereich (42, 44), der sich von dem Steckeraufnahmeende (12) zwischen der einen innenliegenden Seitenwand (18) und der angrenzenden außenliegenden Seitenwand (28) durch das Gehäuse (11) hindurch und in Richtung auf das rückwärtige Ende (14) erstreckt, sowie einen zweiten Endbereich (49), der sich von dem Gehäuse (11) wegstreckt, und wobei die Steckeraufnahmeöffnung (16) für die Aufnahme eines elektrischen Verbinder-Steckers (8) mit darin befindlichen, voneinander beabstandeten Kontaktelementen zum Angreifen an den Kontaktbereichen (38) dimensioniert ist, dadurch gekennzeichnet, daß die mittleren Bereiche (42, 44) der Leiter (36) in das Gehäuse (11) eingesetzt eingegossen sind, daß die zweiten Endbereiche (49) der Leiter (36) aus der angrenzenden außenliegenden Seitenwand (28) heraustreten, daß die ersten Endbereiche (38) der Leiter (36) von der einen innenliegenden Seitenwand (18) an einer Stelle heraustreten, die sich in der Nähe des Steckeraufnahmeendes (12) befindet, daß der mittlere Bereich (42, 44) jedes Leiters (36) fest und unbeweglich in dem Gehäuse (11) eingeschlossen ist, und daß das Verbinder-Aufnahmeelement (2) hergestellt wurde durch: Stanzen und Formen eines kontinuierlichen Streifens (60), der einen Trägerstreifen (64) umfaß, der in Abständen entlang seiner Längsrichtung Gruppen der Leiter (36) aufweist, die sich seitlich von diesem wegstrecken, wiederholtes Zuführen eines Abschnitts des kontinuierlichen Streifens (60) zu einer Spritzgußvorrichtung (102), die einen Formenhohlraum (84) und Kernstifte (88, 90) aufweist, die komplementär zu dem Gehäuse (11) ausgebildet sind, Positionieren eines Bereichs des kontinuierlichen Streifens (60), an dem sich eine der Gruppen von Leitern (36) befindet, in dem Hohlraum (84), Einspritzen von Gießmaterial in den Hohlraum (84), Entfernen des Abschnitts des kontiniuerlichen Streifens (60) aus dem Hohlraum (84), und durch Abtrennen des Trägerstreifens (64) von den Leitern (36).

5. Elektrisches Verbinder-Aufnahmeelement nach Anspruch 4, dadurch gekennzeichnet, daß das Verbinder-Aufnahmeelement (2) für die Befestigung auf einer Schaltungsplatte (4) ausgelegt ist, derart, daß die benachbarte außenliegende Seitenwand (28) der Schaltungsplatte (4) gegenüberliegt, daß das Gehäuse (11) eine Vielzahl durch Stanzen und Formen gebildeter, metallischer Befestigungsstifte (54) aufweist, die zwischen der einen innenliegenden Seitenwand (18) und der angrenzenden außenliegenden Seitenwand (28) in das Gehäuse (11) eingesetzt eingegossen sind, daß sich die metallischen Befestigungsstifte (54) senkrecht von der angrenzenden außenliegenden Seitenwand (28) wegstrecken, daß die zweiten Endbereiche (49) der Leiter (36) zwischen den Befestigungsstiften (54) positioniert sind, und daß die Befestigungsstifte (54) zum Einsetzen in Stiftaufnahmelöcher in der Schaltungsplatte (4) dienen.

6. Elektrisches Verbinder-Aufnahmeelement nach Anspruch 4 oder 5, dadurch gekennzeichnet, daß sich die zweiten Endbereiche (49) der Leiter (36) senkrecht zu der angrenzenden außenliegenden Seitenwand (28) erstrecken.

7. Elektrisches Verbinder-Aufnahmeelement nach Anspruch 4, 5 oder 6, dadurch gekennzeichnet, daß abwechselnd aufeinanderfolgende der zweiten Endbereiche (49) in Richtung auf das rückwärtige Ende (14) des Gehäuses (11) versetzt sind.

**Revendications**

1. Procédé de fabrication d'une bande de douilles de connecteurs électriques comprenant chacune un boîtier isolant (11) ayant une extrémité (12) de réception d'une fiche et une extrémité arrière (14), une ouverture (16) de réception d'une fiche qui pénètre dans l'extrémité (12) de réception d'une fiche, l'ouverture (16) ayant des parois latérales intérieures opposées (18, 20) et des parois extrêmes intérieures opposées (22), le boîtier (11) ayant des parois latérales extérieures (28, 30) dirigées de façon opposée et des parois extrêmes extérieures (32) dirigées de façon opposée, et plusieurs conducteurs électriques (36) espacés côte à côte, chacun des conducteurs (36) comprenant un premier tronçon extrême qui sert de tronçon de contact (38) s'étendant d'une première (18) des parois latérales intérieurs (18, 20) diagonalement dans l'ouverture (16) et vers l'extrémité arrière (14), un tronçon intermédiaire (42, 44) s'étendant de l'extrémité (12) de réception d'une fiche à travers le boîtier (11), entre la première paroi latérale intérieure (18) et la paroi latérale extérieur adjacente (28) et vers l'extrémité arrière (14), et un second tronçon extrême (49) qui sort du boîtier (11), l'ouverture (16) de réception d'une fiche étant dimensionnée pour recevoir une fiche (8) de connecteur électrique renfermant des éléments de contact espacés destinés à porter contre les tronçons de contact (38); le procédé étant caractérisé par les étapes qui consistent à emboutir une longeur continue d'une feuille de métal électriquement conductrice pour produire une bande continue (60) comprenant une bande (64) de support de laquelle dépassent des groupes d'ébauches (36') pour les conducteurs (36), à intervalles espacés, le nombre d'ébauches (36') de conducteurs de chaque groupe étant égal au nombre de conducteurs (36) dans chaque douille de connecteur, à faire avancer la bande continue (60) à travers une presse de formage (100) et former les ébauches de conducteurs à la forme des conducteurs (36) dans la douille de connecteur, à faire avancer par intermittence la bande continue (60) vers un moule (102) ayant une cavité (84) de moule qui correspond à la forme du boîtier (11) et ayant des tiges formant noyaux (88, 90) dans la cavité (84) de moule, qui correspondent à la forme de l'ouverture (16) de réception d'une fiche, à positionner l'un des groupes de conducteurs formés (36) dans la cavité (84), de manière que les tronçons de contact (38) des conducteurs (36) soient maintenus entre les tiges formant noyaux (88, 90), à injecter une matière de moulage dans la cavité (84), à ouvrir le moule (102), et à faire de nouveau avancer la bande continue (60), de manière que la bande continue (60), lorsqu'elle sort du moule (102), comporte des boîtiers (11) de connecteurs moulés sur chaque groupe de conducteurs (36), les tronçons intermédiaires (42, 44) de ceux-ci étant maintenus fermement et fixement dans les boîtiers (11) de connecteurs.

2. Procédé selon la revendication 1, caractérisé par la présence, sur les conducteurs (36), de collets (70) destinés à faciliter l'étape de sectionnement des conducteurs (36) de la bande (64) de support après que la bande continue (60) a été sortie du moule (102).

3. Procédé selon la revendication 1 ou 2, caractérisé en ce que chaque douille (2) de connecteur comporte deux broches métalliques (54) de montage dépassant du boîtier (11), les seconds tronçons extrêmes (49) des conducteurs (36) étant positionnés entre les broches (54) de montage, le procédé comprenant les étapes qui consistent à former deux ébauches (54') de broches de montage pour chacun des groupes de conducteurs (36) pendant l'emboutissage de la longueur continue, les ébauches (36') de conducteurs de chaque groupe étant disposées entre les ébauches (54') de broches de montage.

4. Douille de connecteur électrique comprenant un boîtier isolant (11) ayant une extrémité (12) de réception d'une fiche et une extrémité arrière (14), une ouverture (16) de réception d'une fiche s'étendant dans l'extrémité (12) de réception d'une fiche, l'ouverture (16) ayant des parois latérales intérieures opposées (18, 20) et des parois extrêmes intérieures opposées (22), le boîtier (11) ayant des parois latérales extérieures (28, 30) dirigées de façon opposée et des parois extrêmes extérieures (32) dirigées de façon opposée, et plusieurs conducteurs électriques (36) espacés et côte à côte, chacun des conducteurs (36) comprenant un premier tronçon extrême qui sert de tronçon de contact (38) s'étendant d'une première (18) des parois latérales interieures (18, 20) diagonalement dans l'ouverture (16) et vers l'extrémité arrière (14), un tronçon intermédiaire (42, 44) s'étendant de l'extrémité (12) de réception de fiche à travers le boîtier (11), entre la première paroi latérale intérieure (18) et la paroi latérale extérieure adjacente (28) et vers l'extrémité arrière (14), et un second tronçon extrême (49) qui sort du boîtier (11), l'ouverture (16) de réception d'une fiche étant dimensionnée pour recevoir une fiche (8) de connecteur électrique renfermant des éléments de contacts espacés destinés à porter contre les tronçons de contacts (38);

caractérisée en ce que les tronçons intermédiaires (42, 44) des conducteurs (36) sont moulés par insertion dans le boîtier (11), les seconds tronçons extrêmes (49) des conducteurs (36) sortant de la paroi latérale extérieure adjacente (28), les premiers tronçons extrêmes (38) des conducteurs (36) sortant de la première paroi latérale intérieure (18) en un point proche de l'extrémité (12) de réception d'une fiche, le tronçon intermédiaire (42, 44) de chaque conducteur (36) étant maintenu étroitement et fixement dans le boîtier (11), la douille (2) de connecteur ayant été produite par emboutissage et formage d'une bande continue (60) comprenant une bande (64) de support ayant, à intervalles de sa longueur, des groupes de conducteurs (36) qui en font saillie latéralement, par avance répétitive d'une section de la bande continue (60) vers un appareil (102) de moulage par injection ayant une cavité (84) de moule et des tiges formant noyaux (88, 90) complémentaires du boîtier (11), par positionnement d'un tronçon de la bande continue (60), dont l'un des groupes de conducteurs (36) est dans la cavité (84), par injection d'une matière de moulage dans la cavité (84), par retrait de la section de la bande continue (60) de la cavité et par sectionnement de la bande (64) de support des conducteurs (36).

5. Douille de connecteur électrique selon la revendication 4, caractérisé en ce que la douille (2) de connecteur est destinée à être montée sur une plaquette (4) à circuit, la paroi latérale extérieure adjacente (28) portant contre la plaquette (4) à circuit, plusieurs broches métalliques (54) de montage, embouties et formées, étant moulées par insertion dans le boîtier (11), entre la première paroi latérale intérieure (18) et la paroi latérale extérieure adjacente (28), les broches métalliques (54) de montage dépassant perpendiculairement de la paroi latérale extérieure adjacente (28), les seconds tronçons extrêmes (49) des conducteurs (36) étant positionnés entre les broches (54) de montage, les broches (54) de montage étant destinées à être insérées dans des trous de réception de broches de la plaquette (4) à circuit.

6. Douille de connecteur électrique selon la revendication 4 ou 5, caractérisée en ce que les seconds tronçons extrêmes (49) des conducteurs (36) dépassent perpendiculairement de la paroi latérale extérieure adjacente (28).

7. Douille de connecteur électrique selon la revendication 4, 5 ou 6, caractérisée en ce qu'un second tronçon extrême (49) sur deux est décalé vers l'extrémité arrière (14) du boîtier (11).

0 012 532

FIG.1.

FIG.2.

FIG.3.

FIG.4.

FIG.5.

# FIG.6.

# FIG.7.

FIG.8.

FIG.9.

FIG.10.